# EUROPEAN PATENT SPECIFICATION

(11) **EP 2 949 963 B1**
(45) Date of publication and mention of the grant of the patent: **08.05.2019**
(21) Application number: 15169392.6
(22) Date of filing: 27.05.2015
(51) Int. Cl.: F16F 15/123, F16F 15/14, F16H 45/02

(54) **DAMPER APPARATUS**
DÄMPFERVORRICHTUNG
APPAREIL AMORTISSEUR

(30) Priority: 28.05.2014 JP 2014110581
(43) Date of publication of application: 02.12.2015
(73) Proprietor: AISIN SEIKI KABUSHIKI KAISHA, Kariya-shi, Aichi 448-8650 (JP)
(72) Inventor: Kawazoe, Hiroshi, Kariya-shi, Aichi 448-8650 (JP); Fujiwara, Takuya, Kariya-shi, Aichi 448-8650 (JP); Torii, Miki, Kariya-shi, Aichi 448-8650 (JP)
(74) Representative: Kramer Barske Schmidtchen Patentanwälte PartG mbB

(56) References cited:
- WO-A1-2015/051976
- DE-A1-102011 085 402
- DE-A1-102012 214 680
- DE-A1-102015 003 816
- DE-A1-102015 003 817

## Description

### TECHNICAL FIELD

An embodiment of this disclosure relates to a damper apparatus.

### BACKGROUND DISCUSSION

In the related art, a damper apparatus, which includes a first main damper configured to reduce torque fluctuation using a first elastic portion interposed between a first rotating body and a second rotating body, a second main damper configured to reduce torque fluctuation using a second elastic portion interposed between the second rotating body and a third rotating body, and a dynamic damper configured to prevent the occurrence of vibration using a weight member and a third elastic portion, is known.

JP 2014-52031A is one example of related art.

In the damper apparatus in the related art, the first main damper, the second main damper, and the dynamic damper are accommodated in a single accommodation chamber. Accordingly, for example, an overall size of the damper apparatus may be increased, or the size or disposition of each part of the damper apparatus may be limited.

DE 10 2012 2145680 A1 discloses a torque converter for transmission of rotational torque between e.g. multi-cylinder reciprocating engine and dual-clutch transmission in passenger car, has damping mass rotatably and coaxially supported with respect to rotation mass.

DE 10 2011 085402 A1 relates to a hydrodynamic torque converter with a turbine wheel and a rotary damper with a first energy storage element of a first damper stage and a second energy storage element of a second damper stage and connecting the first and second damper stage damper intermediate portion. The turbine wheel is rotatable relative to the damper intermediate part via the action of a third energy storage element and an additional mass is associated with the turbine wheel.

WO 2015/051976 A1 relates to a damping device for a drive train of a motor vehicle, comprising a starting unit, preferably a hydrodynamic torque converter, and comprising an absorber unit, in particular a torsional vibration damping arrangement, which is rotatable about an axis of rotation, having a radially deflectable absorber mass. At least one element of the starting unit can be coupled and/or is coupled to the absorber unit such that the at least one element of the starting unit causes raising of the absorber mass, the at least one element of the starting unit being attached to the absorber mass.

### SUMMARY

Thus, a need exists for a damper apparatus configured to prevent limitation in the size or disposition of each part and an increase in size of the damper apparatus.

A damper apparatus according to an aspect of this disclosure is configured in accordance with claim 1.. As a result, in the damper apparatus according to the aspect of this disclosure, since the dynamic vibration absorber is provided outside of the accommodation chamber, unlike a configuration in which the dynamic vibration absorber is provided in the accommodation chamber, it is possible to prevent the occurrence of disadvantages, for example, a disadvantage that the size or disposition of each part of the damper apparatus is limited, or a disadvantage that an overall size of the damper apparatus is increased.

In the damper apparatus according to the aspect of this disclosure, the weight member has a flat portion positioned further outside than the third elastic portion relative to the rotation center in a radial direction. Accordingly, it is easy to increase the inertia of the weight member compared to a configuration in which the weight member does not have the flat portion.

In the damper apparatus according to the aspect of this disclosure, the weight member has a bent portion that extends outwards from the flat portion in the radial direction, and is bent inwards in the radial direction. Accordingly, it is easy to much further increase the inertia of the weight member compared to a configuration in which the weight member does not have the bent portion.

In the damper apparatus according to the aspect of this disclosure, the first rotating body is provided with a concave portion that is concave in an axial direction relative to the rotation center, and at least part of the weight member is accommodated in the concave portion. Accordingly, it is possible to prevent an increase in the axial size of the damper apparatus, and to increase the inertia of the weight member unlike a configuration in which the first rotating body is not provided with the concave portion.

In the damper apparatus according to the aspect of this disclosure, lubricant may be accommodated in the accommodation chamber, the damper apparatus may further include an intervention member that is interposed between the first rotating body and the second rotating body, slides against at least one of the first rotating body and the second rotating body, and prevents leakage of the lubricant to the outside of the accommodation chamber. Accordingly, the intervention member can be used as a member that works to seal the accommodation chamber and to apply sliding torque. As a result, it is easy to greatly simplify the configuration of the damper apparatus compared to a configuration in which a member to seal the accommodation chamber and a member to apply sliding torque are separately provided.

In the damper apparatus according to the aspect of this disclosure, the second elastic portion may be positioned outside of the accommodation chamber, and may be positioned further inside than the first elastic portion relative to the rotation center in the radial direction. Accordingly, it is possible to decrease the moment arm of the second elastic portion, and it is easy to further decrease sliding torque between the second elastic portion and other members.

In the damper apparatus according to the aspect of this disclosure, the second rotating body may have a connection portion which extends inwards from outside of a radial end portion of the third rotating body in the radial direction so as to surround the third elastic portion, and is connected to the dynamic vibration absorber. Accordingly, the third rotating body and the connection portion can be realized using a much simpler configuration.

In the damper apparatus according to the aspect of this disclosure, the third elastic portion may be positioned further inside than the radial outer end portion of the third rotating body relative to the rotation center in the radial direction. Accordingly, it is possible to dispose the third elastic portion at a position much closer to the rotation center. As a result, the weight member can be provided in a much wider region outside of the third elastic portion in the radial direction.

The damper apparatus according to the aspect of this disclosure may further include a connection portion which is fixed to the second rotating body outside of the third rotating body in the radial direction, and through which the second elastic portion is provided in line with the third elastic portion in the axial direction.

In the damper apparatus according to the aspect of this disclosure, the weight member may be supported by the third elastic portion via the connection portion.

As a result, by virtue of the connection portion through which the second elastic portion is provided in line with the third elastic portion in the axial direction, the third elastic portion can be disposed at a position much closer to the rotation center, and the third rotating body and the connection portion can be realized using a much simpler configuration.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a view schematically illustrating an example of a damper apparatus of a first embodiment;
Fig. 2 is a front view of the example of the damper apparatus of the first embodiment when seen in an axial direction;
Fig. 3 is a cross-sectional view of the example of the damper apparatus of the first embodiment;
Fig. 4 is a cross-sectional view illustrating an enlarged part of the cross-sectional view in Fig. 3; and
Fig. 5 is a cross-sectional view illustrating key elements of an example of a damper apparatus of a second embodiment.

### DETAILED DESCRIPTION

Hereinbelow, embodiments are described with reference to the accompanying drawings. A plurality of exemplary embodiments hereinbelow contain identical configurational elements. Accordingly, hereinbelow, the same reference signs are assigned to the identical configurational elements, and repeated descriptions are omitted. The configurations (technical features) of the embodiments illustrated hereinbelow, and actions and results (effects) caused by the configurations are examples.

### First Embodiment

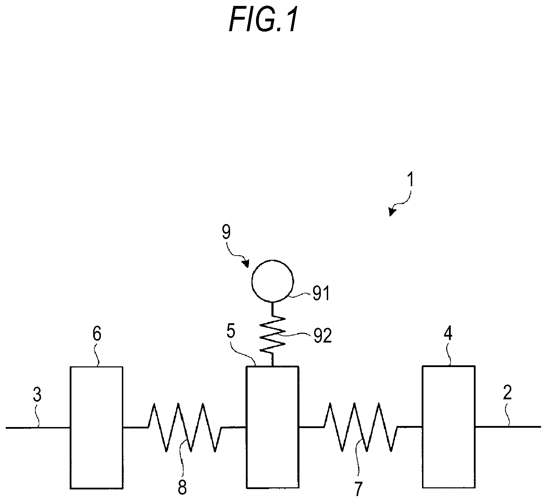

As illustrated in Fig. 1, for example, a damper apparatus (torque fluctuation absorbing apparatus) 1 of an embodiment is provided between a power source and a passive portion (driven portion) in a drive system of a vehicle. Specifically, the damper apparatus 1 is provided between an output shaft (coupling target) 2 of the power source and an input shaft (coupling target) 3 of the passive portion, and transmits power between the output shaft 2 and the input shaft 3. The damper apparatus 1 can absorb (dampen or prevent) torque fluctuation or torsional vibration occurring as a result of twisting between the output shaft 2 and the input shaft 3. The damper apparatus 1 along with the output shaft 2 and the input shaft 3 forms a power transmission path. The power source is an engine, a motor, or the like, and the passive portion is a transmission, a transaxle, or the like. The power source may be a hybrid power source including both an engine and a motor. The passive portion may include a motor.

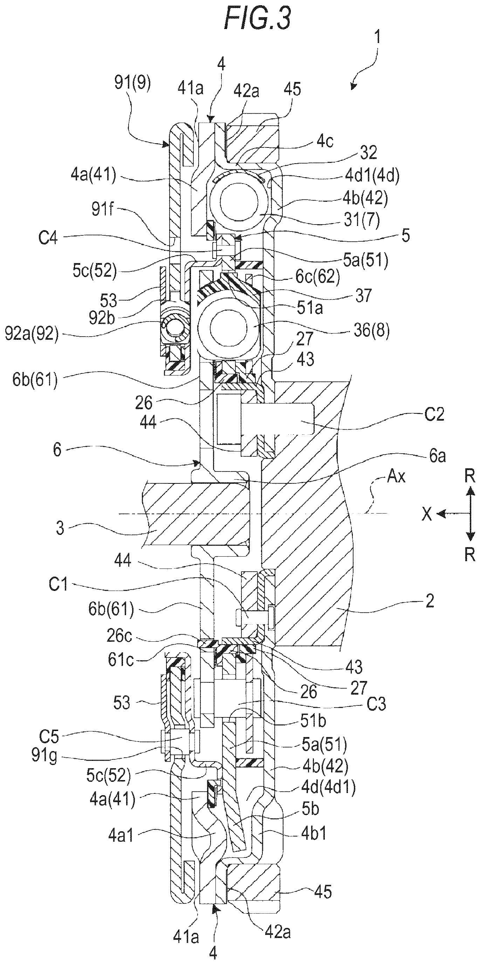

A rotation center (rotary shaft) (refer to Fig. 3) Ax of the damper apparatus 1 denotes a rotation center of rotating members (rotating bodies 4 to 6, elastic portions 7 and 8, a dynamic vibration absorber 9, and the like) of the damper apparatus 1. The rotation center Ax substantially coincides with a rotation center of the output shaft 2 and the input shaft 3. Unless specially noted hereinbelow, an axial direction denotes an axial direction relative to the rotation center Ax, a radial direction denotes a radial direction relative to the rotation center Ax, and a circumferential direction denotes a circumferential direction relative to the rotation center Ax. In the following detailed description, for illustrative purposes, an axial side (the left side in Fig. 1) on which the transmission is positioned denotes a first axial side, and an axial side (the right side in Fig. 1) on which the engine is disposed denotes a second axial side. In the drawings, the first axial side is denoted by arrow X, and the radial outside is denoted by arrow R. Hereinbelow, a direction in which the damper apparatus 1 rotates with the drive force of a drive source is referred to as a positive rotation direction, and the positive rotation direction is denoted by arrow F in the drawings.

As illustrated in Fig. 1, the damper apparatus 1 includes a plurality (for example, three) of the rotating bodies (mass, spring mass, or momentum body) 4 to 6; a plurality (for example, two) of the elastic portions 7 and 8; and the dynamic vibration absorber 9.

The rotating bodies 4 to 6 are connected in series to each other on the power transmission path. The rotating bodies 4 to 6 can rotate about the rotation center Ax. The rotating body 4 is coupled to the output shaft 2, and rotates integrally with the output shaft 2. That is, a rotating drive force is input to the rotating body 4 from the outside. The rotating body 6 is coupled to the input shaft 3, and rotates integrally with the input shaft 3. The rotating body 5 is provided between the rotating bodies 4 and 6, and is connected to the rotating bodies 4 and 6 via the respective elastic portions 7 and 8. In the embodiment, the rotating body 4 is an example of a first rotating body, the rotating body 5 is an example of a second rotating body, and the rotating body 6 is an example of a third rotating body.

The elastic portion 7 and the elastic portion 8 are connected in series to each other. The elastic portion 7 is interposed between the rotating bodies 4 and 5. The elastic portion 7 is elastically deformed by relative rotation between the rotating bodies 4 and 5. The elastic portion 7 is elastically deformed, and thus, the elastic portion 7 absorbs (dampens or prevents) torque fluctuation occurring between the rotating bodies 4 and 5. In contrast, the elastic portion 8 is interposed between the rotating bodies 5 and 6. The elastic portion 8 is elastically deformed by relative rotation between the rotating bodies 5 and 6. The elastic portion 8 is elastically deformed, and thus the elastic portion 8 absorbs (dampens or prevents) torque fluctuation occurring between the rotating bodies 5 and 6. In the embodiment, the elastic portion 7 is an example of a first elastic portion, and the elastic portion 8 is an example of a second elastic portion.

The dynamic vibration absorber 9 is provided in the rotating body 5. Specifically, the dynamic vibration absorber 9 has a weight member 91, and an elastic portion 92 interposed between the rotating body 5 and the weight member 91. The elastic portion 92 is elastically deformed by relative rotation between the rotating body 5 and the weight member 91. The elastic portion 92 absorbs (dampens or prevents) torsional vibration occurring between the rotating body 4 (the output shaft 2) and the rotating body 6 (the input shaft 3). In the embodiment, the elastic portion 92 is an example of a third elastic portion.

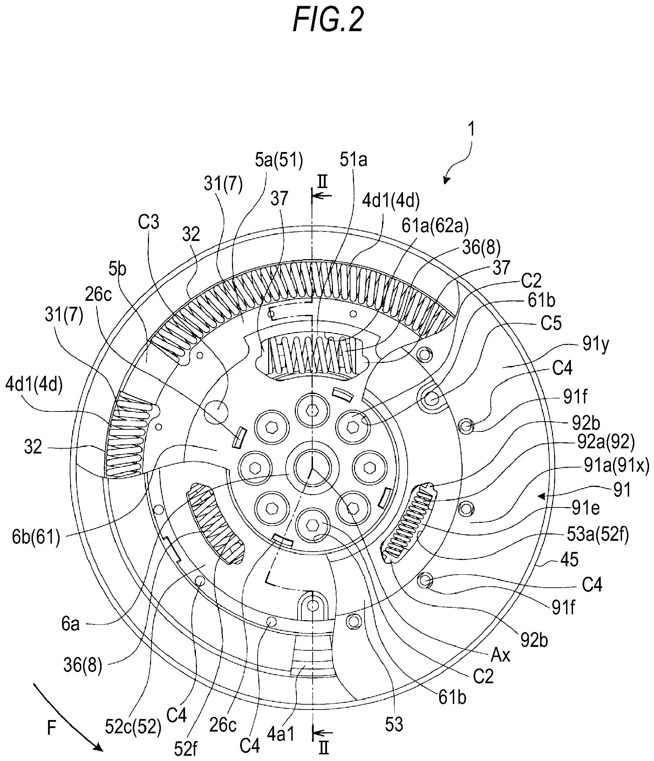

Hereinbelow, each portion of the damper apparatus 1 is described with reference to Figs. 2 to 4. In Fig. 2, parts of members are not illustrated.

As illustrated in Fig. 3, the rotating body 4 is positioned on the second axial side (the right side in Fig. 3) of the damper apparatus 1. The rotating body 4 has a pair of wall portions 4a and 4b and a connection portion 4c, in which the wall portions 4a and 4b are separated from each other in an axial direction (the direction of arrow X), and the connection portion 4c connects the wall portion 4a to the wall portion 4b. Each of the wall portions 4a and 4b is formed in an annular plate-like shape, and widens along a radial direction (the direction of arrow R). The wall portion 4a is positioned on the first axial side (the left side in Fig. 3) of the wall portion 4b. The wall portion 4a overlaps an outer edge portion (radial outer end portion) of the wall portion 4b in the axial direction. The connection portion 4c connects an outer edge portion of the wall portion 4a to the outer edge portion of the wall portion 4b, and is formed in a cylindrical shape. The connection portion 4c is also referred as a wall portion or a cylindrical portion. For example, the wall portions 4a and 4b, and the connection portion 4c are made of a metal material.

An accommodation chamber (space) 4d is provided in the rotating body 4, and is surrounded by the wall portions 4a and 4b and the connection portion 4c. The accommodation chamber 4d is formed as a circular-arc space between the wall portions 4a and 4b which are separated from each other in the axial direction. The elastic portion 7 is accommodated in the accommodating chamber 4d. As illustrated in a lower part in Fig. 3, the wall portions 4a and 4b are respectively provided with protruding portions 4a1 and 4b1. The protruding portion 4a1 protrudes from the wall portion 4a toward the second axial side (toward the wall portion 4b), and the protruding portion 4b1 protrudes from the wall portion 4b toward the first axial portion side (toward the wall portion 4a). The protruding portions 4a1 and 4b1 overlap each other in the axial direction while being axially separated from each other. In the embodiment, plural pairs (for examples, three pairs) of the protruding portions 4a1 and 4b1 are provided in the rotating body 4 with a gap therebetween in the circumferential direction, and partition (divide) the accommodating chamber 4d off into a plurality (for example, three) of accommodation regions (accommodation spaces) 4d1. A single elastic portion 7 is put (accommodated) in each of the accommodation regions 4d1. The protruding portions 4a1 and 4b1 are provided in such a manner as to overlap the elastic portion 7 in the circumferential direction (direction of arrow F in Fig. 2).

The rotating body 4 is made up of a plurality of components. In the embodiment, the rotating body 4 has plates 41 to 44, in which the plate 41 is positioned on the first axial side (the left side in Fig. 3), the plate 42 is positioned on the second axial side, and the plates 43 and 44 are positioned toward the inside in the radial direction. The plate 41 includes the wall portion 4a and part of the connection portion 4c. The plate 42 includes part of the wall portion 4b and part of the connection portion 4c. Each of the plates 43 and 44 includes part of the wall portion 4b.

As illustrated in Fig. 3, the plates 41 and 42 are coupled together via welding or the like in a state where the respective outer edge portions thereof overlap each other in the axial direction. Concave portions 41a and 42a which are axially concave are respectively provided in the outer edge portions of the plates 41 and 42 via drawing or the like. The concave portion 41a is provided in a surface on the first axial side (the left side in Fig. 3) of the plate 41, and is concave toward the second axial side (toward the plate 42). In contrast, the concave portion 42a is provided in a surface on the second axial side of the plate 42, and is concave toward the first axial side (toward the plate 41). The concave portion 42a is provided with a gear 45 having teeth on the outer circumference. The gear 45 is coupled to the plate 42 via welding or the like. The gear 45 meshes with a gear (not illustrated) that is provided in the engine starter motor.

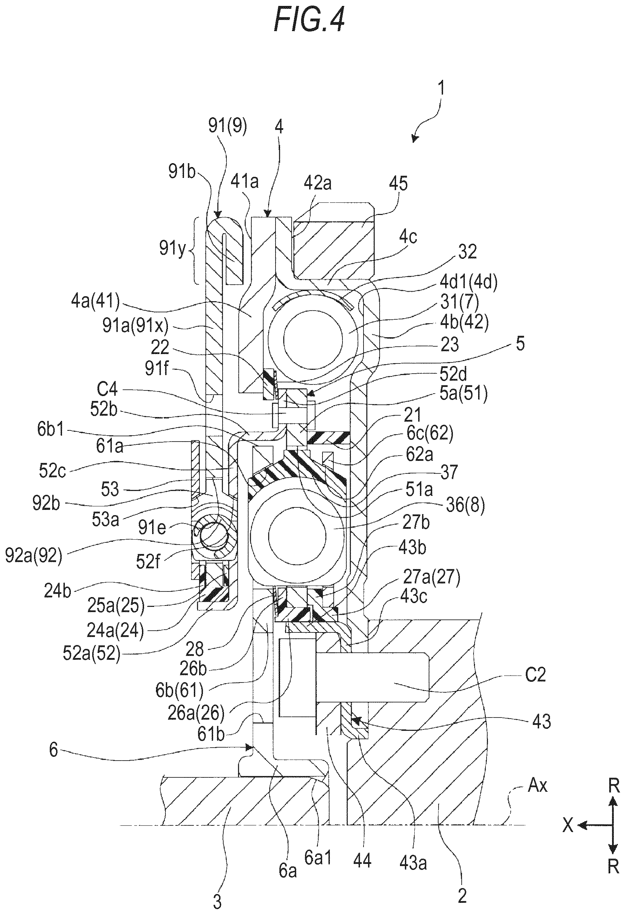

As illustrated in Fig. 4, the plate 43 has two cylindrical portions 43a and 43b, and a connection portion 43c, in which the cylindrical portions 43a and 43b are separated from each other in a radial direction, and the connection portion 43c connects the cylindrical portion 43a to the cylindrical portion 43b. The cylindrical portion (circular cylindrical portion) 43a is positioned on the second axial side (the right side in Fig. 4) in the plate 43, and is positioned between an inner edge portion (radial inner end portion) of the plate 42 and part of the output shaft 2. The cylindrical portion (circular cylindrical portion) 43b is positioned on the first axial side in the plate 43, and is positioned between intervention members 26 and 27 and the plate 44, in which the intervention members 26 and 27 are positioned toward the outside in the radial direction, and the plate 44 is positioned toward the inside in the radial direction. The connection portion 43c widens in the form of an annular plate while intersecting the rotation center Ax, and is interposed between the plate 42 positioned on the second axial side and the plate 44 positioned on the first axial side. The diameter of the plates 43 and 44 is smaller than that of the plate 42. As illustrated in Fig. 3, the plates 42 to 44 are coupled (integrated) together with coupling tools (for example, rivets) C1 while overlapping each other in the axial direction. The plates 42 to 44 of the wall portion 4b are coupled to the output shaft 2 with coupling tools (for example, rivets) C2. That is, the rotating body 4 rotates integrally with the output shaft 2.

As illustrated in Fig. 3, the rotating body 5 is positioned further inside than an elastic member 31 (the elastic portion 7) in the radial direction. The rotating body 5 has a circular, annular plate-like wall portion 5a that widens along the radial direction relative to the rotation center Ax. As illustrated in Fig. 2, part of an outer edge portion (protruding portion 5b) of the wall portion 5a protrudes outwards in the radial direction. In the embodiment, a plurality (for example, three) of the protruding portions 5b are provided in the rotating body 5 with a gap therebetween in the circumferential direction. As illustrated in the lower part in Fig. 3, the protruding portion 5b is positioned between the protruding portions 4a1 and 4b1 which are separated from each other in the axial direction. The protruding portions 5b along with the protruding portions 4a1 and 4b1 partition (divide) the accommodation chamber 4d off into the plurality (for example, three) of accommodation regions (accommodation spaces) 4d1 in the circumferential direction. The rotating body 5 has a stick-out portion 5c positioned on the first axial side (the left side in Fig. 3) of an elastic member 36 (the elastic portion 8).

The rotating body 5 is made up of a plurality of components. In the embodiment, the rotating body 5 has a plate 51 positioned on the second axial side (the right side in Fig. 3), and plates 52 and 53 positioned on the first axial side. The plate 51 includes the wall portion 5a and the protruding portion 5b. Each of the plates 52 and 53 includes part of the stick-out portion 5c.

As illustrated in Fig. 3, the plate 51 is provided with an opening 51a (refer to an upper side of the rotation center Ax) and an opening 51b (refer to a lower side of the rotation center Ax), in which the elastic portion 8 is accommodated in the opening 51a, and a coupling tool C3 passes through the opening 51b. As illustrated in Fig. 2, the opening 51a is formed as a long hole that extends in the circumferential direction. The elastic portion 8 in an initial state (set state) is disposed between a first circumferential edge portion and a second circumferential edge portion of the opening 51a. A plurality (for example, three) of the openings 51a are provided in the plate 51 with a gap therebetween in the circumferential direction, and the elastic portion 8 is disposed in each of the openings 51a. Fig. 2 only illustrates one of the openings 51a. The plate 51 is provided with a plurality (for example, three) of the openings 51b with a gap therebetween in the circumferential direction, and the opening 51b is formed as a long hole that extends in the circumferential direction, which is not illustrated. For example, the coupling tool C3 is a rivet, and is configured in such a manner as to be able to move in the opening 51b in the circumferential direction.

As illustrated in Fig. 4, the plate 52 has cylindrical portions 52a and 52b; a wall portion 52c; and a flange portion 52d, in which the cylindrical portions 52a and 52b are separated from each other in the radial direction, the wall portion 52c is provided between the cylindrical portions 52a and 52b, and the flange portion 52d is provided on a second axial end portion of the cylindrical portion 52b. The cylindrical portions 52a and 52b are formed in a circular cylindrical shape. The cylindrical portion 52a is positioned on the first axial side (the left side in Fig. 4) in the plate 52, and toward the inside (a lower side in Fig. 4) in the radial direction. The cylindrical portion 52b is positioned on the second axial side in the plate 52, and toward the outside in the radial direction. The wall portion 52c widens in the form of an annular plate while intersecting the rotation center Ax. The flange portion 52d sticks out outwards from the second axial end portion of the cylindrical portion 52b in the radial direction, and overlaps the plate 51 in the axial direction.

The plate 53 is positioned on the first axial side (the left side in Fig. 4) of the plate 52, and overlaps the wall portion 52c in the axial direction. As illustrated on the lower side of the rotation center Ax in Fig. 3, the plates 52 and 53 are coupled (integrated) together with coupling tools C5. As illustrated on the upper side of the rotation center Ax in Fig. 3, the plates 51 and 52 are coupled (integrated) together with coupling tools (for example, rivets) C4. That is, the plates 51 to 53 rotate integrally about the rotation center Ax.

As illustrated in Fig. 4, openings (through holes) 52f and 53a are respectively provided in the plates 52 and 53, and overlap each other in the axial direction. As illustrated in Fig. 2, the elastic portion 92 in an initial state (set state) is accommodated between a first circumferential edge portion and a second circumferential edge portion of each of the openings 52f and 53a. A plurality of the openings 52f and 53a are respectively provided in the plates 52 and 53 with a gap therebetween in the circumferential direction. Fig. 2 only illustrates a pair of the openings 52f and 53a. As illustrated in Fig. 4, the dynamic vibration absorber 9 having the weight member 91 and the elastic portion 92 is connected to the plates 52 and 53. In the embodiment, the cylindrical portion 52a and the wall portion (part of the wall portion) 52c are connected to the flange portion 52d and the plate (part of the plate) 51 via the cylindrical portion 52b, in which the cylindrical portion 52a and the wall portion 52c are positioned on the first axial side (the left side in Fig. 4) of a wall portion 6b, the flange portion 52d and the plate 51 are positioned on the second axial side of the wall portion 6b, and the cylindrical portion 52b is positioned further outside than an outer edge portion (radial outer end portion) 6b1 of the wall portion 6b of the rotating body 6 in the radial direction. The cylindrical portion 52b is an example of a connection portion.

As illustrated in Fig. 3, the elastic portion 7 has the elastic member 31 interposed between the rotating bodies 4 and 5. Torque (rotation) is transmitted between the rotating bodies 4 and 5 via the elastic member 31. The rotating body 4 can rotate relative to the rotating body 5 within the expandable and contractable range (predetermined angular range) of the elastic member 31. In the embodiment, a plurality (for example, three) of the elastic members 31 (the elastic portions 7) are provided with a gap therebetween in the circumferential direction. Fig. 2 only illustrates two of the elastic members 31 (the elastic portions 7).

For example, the elastic member 31 works as a compression spring that is contracted (is elastically deformed, or is expanded or contracted) along the circumferential direction (the direction of arrow F in Fig. 2). For example, the elastic member 31 is a coil spring made of a metal material. For example, the elastic member 31 is a linear coil spring that is circumferentially bent and is assembled, or a spring (so-called arc spring), a coil winding axis of which is bent along the circumferential direction. A winding axis of the elastic member (coil spring) 31 is bent along the circumferential direction. As illustrated in Fig. 2, a single elastic member 31 is put (accommodated) in each of the accommodation regions 4d1. The elastic member 31 in the accommodation region 4d1 is supported by a sheet-like support member 32. As illustrated in Fig. 3, the support member 32 is interposed between the elastic member 31 and the connection portion 4c. That is, the support member 32 has at least a portion that is positioned further outside than the elastic member 31 in the radial direction and further inside than the connection portion 4c in the radial direction. For example, the support member 32 can prevent wear of the elastic member 31 by preventing direct contact between the elastic member 31 and the rotating body 4. The support member 32 is also referred to as a preventive portion or an intervention portion. The support member 32 is made of a metal material, a synthetic resin material, or the like.

The elastic member 31 and the support member 32 in the accommodation region 4d1 are circumferentially interposed between the protruding portions 4a1, 4b1, and 5b (refer to Fig. 3) and the other protruding portions 4a1, 4b1, and 5b which are separated from those protruding portions 4a1, 4b1, and 5b in the circumferential direction. In this configuration, when the rotating body 4 rotates relative to the rotating body 5 in a direction in which the protruding portions 4a1 and 4b1 on one circumferential side of the rotating body 4 approach the protruding portion 5b on the other circumferential side of the rotating body 5, the elastic member 31 is elastically contracted due to the protruding portions 4a1, 4b1, and 5b. In contrast, in a state where the elastic member 31 is elastically contracted in the accommodation region 4d1, when the rotating body 4 rotates relative to the rotating body 5 in a direction in which the protruding portions 4a1 and 4b1 on the one circumferential side of the rotating body 4 separate from the protruding portion 5b on the other circumferential side of the rotating body 5, the elastic member 31 is elastically expanded. The elastic member 31 (the elastic portion 7) can store torque as a compression force when being elastically contracted, and the elastic member 31 can discharge a compression force as torque when being elastically expanded.

As illustrated in Fig. 4, intervention members 21 and 22 are provided between the elastic member 31 (the elastic portion 7) and the elastic member 36 (the elastic portion 8), and are interposed between the rotating bodies 4 and 5. The intervention member 21 is interposed between the wall portions 4b and 5a which are separated from each other in the axial direction, and is formed in an annular shape about the rotation center Ax. The intervention member 22 is interposed between the wall portion 4a and the flange portion 52d which are separated from each other in the axial direction, and is formed in an annular shape about the rotation center Ax. The intervention members 21 and 22 are made of a synthetic resin material or the like.

An elastic member 23 is provided between the intervention member 22 and the flange portion 52d. The elastic member 23 applies an elastic force to the intervention member 22 and the flange portion 52d such that the intervention member 22 and the flange portion 52d separate from each other in the axial direction. That is, the elastic member 23 presses the intervention member 22 toward the wall portion 4a, and presses the flange portion 52d toward the wall portion 4b while the wall portion 5a and the intervention member 21 are interposed between the elastic member 23 and the wall portion 4b. In the embodiment, for example, when the rotating bodies 4 and 5 rotate relative to each other about the rotation center Ax, the wall portion 4a and the intervention member 22 slide against each other. In addition, the wall portion 4b and the intervention member 21 slide against each other, the wall portion 5a and the intervention member 21 slide against each other, or both the sliding motions occur. The elastic member 23 can apply sliding resistance (frictional resistance) to the intervention members 21 and 22. For example, the elastic member 23 is a circular annular (circular cylindrical) plate spring (disc spring or cone spring) made of a metal material.

Grease (lubricant) is put in the accommodation chamber 4d. The grease can prevent the occurrence of wear associated with sliding between the members (the elastic member 31, the support member 32, or the like) accommodated in the accommodation chamber 4d and the wall portions 4a and 4b, the connection portion 4c, or the like which form the accommodation chamber 4d. In addition, the grease can prevent the occurrence of wear associated with sliding between the elastic member 31 and the support member 32. The grease can stay in the accommodation chamber 4d due to its viscosity. Accordingly, leakage of the grease to the outside of the accommodation chamber 4d is prevented. In the embodiment, the radial inside portion of the accommodation chamber 4d is closed by (sealed with) the intervention members 21 and 22 and the elastic member 23. That is, the accommodation chamber 4d is bounded by the wall portions 4a and 4b, the connection portion 4c, the intervention members 21 and 22, and the elastic member 23. In the embodiment, it is much easier to prevent the leakage of the grease to the outside of the accommodation chamber 4d than a configuration in which the intervention members 21 and 22 are not provided. The intervention members 21 and 22 are also referred to as a sliding member, a resistant member, or a seal member.

As illustrated in Figs. 3 and 4, the rotating body 6 is positioned further inside than the elastic member 31 (the elastic portion 7) in the radial direction. The rotating body 6 has a cylindrical portion 6a, and wall portions 6b and 6c, in which the cylindrical portion 6a is positioned toward the inside in the radial direction, the wall portion 6b protrudes (sticks out) outwards from the cylindrical portion 6a in the radial direction, and the wall portion 6c is provided on the second axial side (the right side in Figs. 3 and 4) of the wall portion 6b. The cylindrical portion 6a is formed in a circular cylindrical shape. A spline 6a1 (refer to Fig. 4) is provided on an inner surface of the cylindrical portion 6a. The input shaft 3 is coupled to the spline 6a1 of the cylindrical portion 6a. The wall portions 6b and 6c widen in the form of an annular plate while intersecting the rotation center Ax. The wall portion 6b is positioned on the first axial side of the wall portion 5a, and the wall portion 6c is positioned on the second axial side of the wall portion 5a. The cylindrical portion 6a and the wall portions 6b and 6c are made of a metal material or the like.

The rotating body 6 is made up of a plurality of components. In the embodiment, the rotating body 6 has a plate 61 positioned on the first axial side (the left side in Figs. 3 and 4), and a plate 62 positioned on the second axial side. The plate 61 includes the cylindrical portion 6a and the wall portion 6b. The plate 62 includes the wall portion 6c.

As illustrated in Fig. 4, the plates 61 and 62 are respectively provided with openings (through holes) 61a and 62a. The openings 61a and 62a overlap the opening 51a of the plate 51 (the rotating body 5) in the axial direction. As illustrated in Fig. 2, the elastic portion 8 in an initial state (set state) is accommodated between a first circumferential edge portion and a second circumferential edge portion of each of the openings 61a and 62a. A plurality of the openings 61a and 62a are respectively provided in the plates 61 and 62 with a gap therebetween in the circumferential direction, and the elastic portion 8 is disposed in the openings 61a and 62a. Fig. 2 only illustrates a pair of the openings 61a and 62a. As illustrated in Fig. 4, an opening (through hole) 61b is provided further inside than the opening 61a of the plate 61 in the radial direction. As illustrated in Fig. 2, in the embodiment, a plurality of the openings 61b are provided in the plate 61 with a gap therebetween in the circumferential direction. The opening 61b can work as a hole (hole for operation) that allows a tool, the coupling tool C2 for coupling together the wall portion 4b and the output shaft 2, or the like to pass therethrough during assembly, maintenance, or the like.

As illustrated in Fig. 4, the plate 61 is positioned on the first axial side (the left side in Fig. 4) of the plate 51, and the plate 62 is positioned on the second axial side of the plate 51. As illustrated on the lower side of the rotation center Ax in Fig. 3, the plates 61 and 62 are coupled (integrated) together with the coupling tools C3 that pass through the opening 51b of the plate 51.

As illustrated in Figs. 2 to 4, the elastic portion 8 has the elastic member 36 interposed between the rotating bodies 5 and 6. Torque (rotation) is transmitted between the rotating bodies 5 and 6 via the elastic member 36. The range (angular range) of relative rotation between the rotating bodies 5 and 6 is determined by the coupling tool C3 and the opening 51b (refer to the lower side of the rotation center Ax in Fig. 3). The opening 51b is provided as a long hole that extends in the circumferential direction, which is not illustrated, and the coupling tool C3 is configured in such a manner as to be able to move in the opening 51b along the circumferential direction. The rotating bodies 5 and 6 can rotate relative to each other in an angular range in which the coupling tool C3 comes into contact with the opposite circumferential end portions of the opening 51b. In the embodiment, a plurality (for example, three) of the elastic members 36 (the elastic portions 8) are provided with a gap therebetween in the circumferential direction. Fig. 2 only illustrates two of the elastic members 36 (the elastic portions 8).

As illustrated in Fig. 2, for example, the elastic member 36 works as a compression spring that is contracted (is elastically deformed, or is expanded or contracted) along the circumferential direction or a direction tangential to the circumferential direction. For example, the elastic member 36 is a coil spring made of a metal material. Specifically, the elastic member 36 is a so-called linear coil spring, a winding axis of which is straight. The winding axis of the elastic member (coil spring) 36 is positioned substantially along the circumferential direction or the direction substantially tangential to the circumferential direction. The elastic member 36 is supported by a pair of support members (retainers) 37. The pair of support members 37 are respectively provided on the opposite sides of the elastic member 36 in the circumferential direction. The support member 37 has a portion positioned further outside than the elastic member 36 in the radial direction. For example, the support member 37 can work to more stably support the elastic member 36, to help the elastic member 36 undergo more stable elastic deformation (expansion and contraction), or to prevent direct contact between the elastic member 36 and the rotating bodies 5 and 6 (prevent wear of the elastic member 36). The support member 37 is made of, a synthetic resin material, for example.

As illustrated in Fig. 2, the elastic member 36 and the support member 37 are interposed between the opposite circumferential edge portions of the opening 51a, and are interposed between the opposite circumferential edge portions of each of the openings 61a and 62a. In this configuration, when the rotating body 5 rotates relative to the rotating body 6 in a direction in which the first circumferential edge portion of the opening 51a of the rotating body 5 approaches the second circumferential edge portion of each of the openings 61a and 62a of the rotating body 6, the elastic member 36 (and the support member 37) is elastically contracted due to these edge portions. In contrast, in a state where the elastic member 36 is elastically contracted in the openings 51a, 61a, and 62a, when the rotating body 5 rotates relative to the rotating body 6 in a direction in which the first circumferential edge portion of the opening 51a of the rotating body 5 separates from the second circumferential edge portion of each of the openings 61a and 62a of the rotating body 6, the elastic member 36 (and the support member 37) is elastically expanded. The elastic member 36 (the elastic portion 8) can store torque as a compression force when being elastically contracted, and the elastic member 36 can discharge a compression force as torque when being elastically expanded.

As illustrated in Fig. 4, in the embodiment, the elastic member 36 and the support member 37, that is, the elastic portion 8 is positioned on the radial (the direction of arrow R) inside of the intervention member 21. That is, the elastic portion 8 is positioned outside of the accommodation chamber 4d, and further inside than the elastic portion 7 in the radial direction. For example, a sliding torque (frictional torque) caused by sliding between the support member 37 and the rotating bodies 5 and 6 is likely to increase to the extent that the elastic portion 8 is positioned to be closer to the outside in the radial direction. The reason for this is that the radius (moment arm) of a sliding position from the rotation center Ax is increased when the elastic portion 8 is positioned to be closer to the outside in the radial direction. In this regard, in the embodiment, since the elastic portion 8 is positioned further inside than the elastic portion 7 in the radial direction, even if the elastic portion 8 is disposed outside of the accommodation chamber 4d, and thereby, the benefit of lubrication by grease is not obtained, it is easy to decrease sliding torque (frictional torque) caused by sliding between the support member 37 and the rotating bodies 5 and 6. In addition, it is easy to decrease sliding torque (frictional torque) caused by sliding between the elastic member 36 and the support member 37. Accordingly, for example, it is possible to prevent a deterioration in the torque-fluctuation absorption function of the elastic portion 8 positioned toward the input shaft 3, and it is easy to prevent wear associated with sliding between the support member 37 and the rotating bodies 5 and 6, or wear associated with sliding between the elastic member 36 and the support member 37.

As illustrated in Fig. 4, the intervention members 26 and 27 are provided further inside than the elastic member 36 in the radial direction, and are interposed between the rotating body 4 and the rotating bodies 5 and 6. The intervention member 26 has a cylindrical portion (circular cylindrical portion) 26a and a wall portion 26b, in which the cylindrical portion 26a is interposed between an inner edge portion of the wall portion 5a and an outer circumferential portion of the cylindrical portion 43b, and the wall portion 26b protrudes outwards from the cylindrical portion 26a in the radial direction, and is positioned between the wall portions 5a and 6b. In the embodiment, the wall portion 5a (the rotating body 5) is radially supported and located by the cylindrical portion 43b (the rotating body 4) via the intervention member 26. That is, the wall portion 5a (the rotating body 5) is supported by the intervention member 26 so as to be able to rotate in a predetermined posture. As illustrated in the lower side of the rotation center Ax in Fig. 3, the intervention member 26 has a claw portion 26c. The claw portion 26c protrudes from the cylindrical portion 26a toward the first axial side (the left side in Fig. 3), and is inserted into an opening 61c of the wall portion 6b (the plate 61). That is, the intervention member 26 rotates integrally with the rotating body 6. The intervention member 26 is also referred to as a bearing member or a sliding member. The intervention member 26 is made of a synthetic resin material or the like.

As illustrated in Fig. 4, the intervention member 27 has a cylindrical portion (circular cylindrical portion) 27a and a wall portion 27b, in which the cylindrical portion 27a is interposed between an inner edge portion of the wall portion 6c and an outer circumferential portion of the cylindrical portion 43b, and the wall portion 27b protrudes outwards from the cylindrical portion 27a in the radial direction, and is positioned between the wall portions 5a and 6c. At least a portion of the wall portion 27b is provided across the wall portions 5a and 6c which are separated from each other in the axial direction. In the embodiment, the wall portion 6c (the rotating body 6) is radially supported and located by the cylindrical portion 43b (the rotating body 4) via the intervention member 27. That is, the wall portion 6c (the rotating body 6) is supported by the intervention member 27 so as to be able to rotate in a predetermined posture. The intervention member 27 is also referred to as a bearing member or a sliding member. The intervention member 27 is made of a synthetic resin material or the like.

As illustrated in Fig. 4, an elastic member 28 is provided between the intervention member 26 and the wall portion 6b. The elastic member 28 applies an elastic force to the intervention member 26 and the wall portion 6b such that the intervention member 26 and the wall portion 6b separate from each other in the axial direction. That is, the elastic member 28 presses the intervention member 26 toward the wall portion 6c while the wall portion 5a and the intervention member 27 are interposed between the elastic member 28 and the wall portion 6c. In the embodiment, for example, when the rotating bodies 5 and 6 (and the rotating body 4) rotate relative to each other about the rotation center Ax, the wall portion 5a and the intervention member 26 slide against each other. In addition, the wall portion 5a and the intervention member 27 slide against each other, the wall portion 6c and the intervention member 27 slide against each other, or both the sliding motions occur. The elastic member 28 can apply sliding resistance (frictional resistance) to the intervention members 26 and 27. For example, the elastic member 28 is a circular annular (circular cylindrical) plate spring (disc spring or cone spring) made of a metal material.

As illustrated in Fig. 4, the dynamic vibration absorber 9 has the weight member 91 and the elastic portion 92. The weight member 91 is positioned between the plates 52 and 53 which are separated from each other in the axial direction. The weight member 91 has a wall portion 91a and a bent portion 91b, in which the wall portion 91a widens in the form of an annular plate along the radial direction, and the bent portion 91b is provided in an outer edge portion (radial outer end portion) of the wall portion 91a. An inner edge portion of the wall portion 91a is positioned further inside than the elastic portion 92 in the radial direction, and the outer edge portion of the wall portion 91a is positioned further outside than the elastic portion 7 in the radial direction. In the embodiment, the weight member 91 has a first portion (flat portion) 91x and a second portion (outer edge portion) 91y, in which the first portion 91x is positioned further outside than the elastic portion 92 in the radial direction, and the second portion 91y is positioned further outside than the accommodation chamber 4d in the radial direction. The wall portion 91a is provided with openings (through holes) 91e, 91f, and 91g. The opening 91e is formed as a long hole that overlaps the respective openings 52f and 53a of the plates 52 and 53 (the rotating body 5) in the axial direction. As illustrated in Fig. 2, a plurality of the openings 91e are provided in the wall portion 91a with a gap therebetween in the circumferential direction, and the elastic portion 92 is disposed in each of the openings 91e. Fig. 2 only illustrates one of the openings 91e. As illustrated in Fig. 4, the opening 91f can work as a hole (hole for operation) that is positioned further outside than the opening 91e in the radial direction, and allows a tool, the coupling tool C4 for coupling together the wall portion 5a and the flange portion 52d, or the like to pass therethrough during assembly, maintenance, or the like. As illustrated on the lower side of the rotation center Ax in Fig. 3, the opening 91g is formed as a long hole that is positioned further outside than the opening 91e in the radial direction, and allows the coupling tool C5 for coupling together the plate 52 and the plate 53 to pass therethrough.

As illustrated in Fig. 4, the bent portion 91b is bent inwards from the outer edge portion of the wall portion 91a in the radial direction such that the bent portion 91b is formed in the shape of a U. The bent portion 91b faces the concave portion in a state where part of the bent portion 91b is accommodated in the concave portion which is concave, and is bent (folded back) toward the rotation center Ax. The part of the bent portion 91b is positioned in the cave portion 41a that is formed in the outer edge portion of the wall portion 4a (the rotating body 4). The concave portion 41a is a space (dead space) formed between the wall portion 91a and the wall portion 4a. Accordingly, in the embodiment, it is possible to prevent an increase in the axial size of the damper apparatus 1, and to increase the inertia of the weight member 91 unlike a configuration in which the concave portion 41a is not provided. In the embodiment, the weight member 91 is made up of a single plate. The weight member 91 can work as an inertial body (mass).

As illustrated in Figs. 2 to 4, the elastic portion 92 has an elastic member 92a interposed between the weight member 91 and the rotating body 5. The elastic member 92a is accommodated in the openings 52f, 53a, and 91e which overlap each other in the axial direction. Torque (rotation) is transmitted between the rotating body 5 and the weight member 91 via the elastic member 92a. The weight member 91 can rotate relative to the rotating body 5 within the expandable and contractable range (predetermined angular range) of the elastic member 92a. That is, in the embodiment, the range of relative rotation between the rotating body 5 and the weight member 91 about the rotation center Ax is limited by a specified value for the compression amount of the elastic member 92a (compression limit). In the embodiment, insofar as the range of rotation between the rotating body 5 and the weight member 91 is limited (by the compression limit of the elastic member 92a), relative rotation therebetween may be limited by contact between the coupling tool C5 and a circumferential edge portion of the opening 91g (refer to Fig. 3), or relative rotation therebetween may be limited without the coupling tool C5 coming into contact with the circumferential edge portion of the opening 91g. In the latter case, a sound caused by contact between the coupling tool C5 and the edge portion of the opening 91g is easily prevented.

In the embodiment, a plurality (for example, three) of the elastic members 92a (the elastic portions 92) are provided with a gap therebetween in the circumferential direction. Fig. 2 only illustrates one of the plurality of elastic members 92a. Specifically, the elastic members 92a (the elastic portions 92) are provided at the same circumferential positions in which the plurality of elastic members 36 (the elastic portions 8) line up in the circumferential direction, and are disposed so as to overlap the elastic members 36 (the elastic portions 8) in the axial direction. For example, the elastic member 92a works as a compression spring that is contracted (is elastically deformed, or is expanded or contracted) along the circumferential direction or a direction tangential to the circumferential direction. For example, the elastic member 92a is a coil spring made of a metal material. Specifically, the elastic member 92a is a so-called linear coil spring, a winding axis of which is straight. The winding axis of the elastic member (coil spring) 92a is positioned substantially along the circumferential direction or the direction substantially tangential to the circumferential direction. As illustrated in Fig. 2, the elastic member 92a is supported by a pair of support members (retainers) 92b. The pair of support members 92b are respectively provided on the opposite sides of the elastic member 92a in the circumferential direction. For example, the support member 92b can work to more stably support the elastic member 92a, to help the elastic member 92a to undergo more stable elastic deformation (expansion and contraction), or to prevent the elastic member 92a from coming into direct contact with the rotating body 5 and the weight member 91 (prevent wear of the elastic member 92a). The support member 92b is made of a synthetic resin material or the like.

As illustrated in Fig. 2, the elastic member 92a and the support member 92b are interposed between the opposite circumferential edge portions of each of the openings 52f and 53a, and are interposed between the opposite circumferential edge portions of the opening 91e. In this configuration, when the rotating body 5 rotates relative to the weight member 91 in a direction in which the first circumferential edge portion of each of the openings 52f and 53a of the rotating body 5 approaches a second circumferential edge portion of the opening 91e of the weight member 91, the elastic member 92a (and the support member 92b) is elastically contracted due to these edge portions. In contrast, in a state where the elastic member 92a is elastically contracted in the openings 52f, 53a, and 91e, when the rotating body 5 rotates relative to the weight member 91 in a direction in which the first circumferential edge portion of each of the openings 52f and 53a of the rotating body 5 separates from the second circumferential edge portion of the opening 91e of the weight member 91, the elastic member 92a (and the support member 92b) is elastically expanded. As such, in the embodiment, the dynamic vibration absorber (dynamic damper) 9 is configured such that the weight member 91 is connected to the rotating body 5 via the elastic members 92a (the elastic portions 92). The dynamic vibration absorber 9 can absorb torsional vibration occurring between the rotating body 4 (the output shaft 2) and the rotating body 6 (the input shaft 3) by virtue of the expansion and contraction of the elastic members 92a and the support members 92b.

As illustrated in Fig. 3, in the embodiment, similar to the elastic portion 8, the elastic member 92a and the support member 92b, that is, the elastic portion 92 is positioned further inside than the elastic portion 7 in the radial direction. Accordingly, since the moment arm of the elastic portion 92 is short, it is easy to decrease sliding torque (frictional torque) caused by sliding between the support member 92b and the rotating body 5, and sliding between the support member 92b and the weight member 91, or it is easy to decrease sliding torque (frictional torque) caused by sliding between the elastic member 92a and the support member 92b. As a result, it is possible to prevent a deterioration in the function of the dynamic vibration absorber 9 for absorbing torsional vibration, and it is easy to prevent wear associated with sliding between the support member 92b and the rotating body 5, and sliding between the support member 92b and the weight member 91, or wear associated with sliding between the elastic member 92a and the support member 92b.

As illustrated in Fig. 4, intervention members 24 and 25 are provided further inside than the elastic member 92a in the radial direction, and are interposed between the rotating body 5 and the weight member 91. The intervention member 24 has a cylindrical portion (circular cylindrical portion) 24a and a wall portion 24b, in which the cylindrical portion 24a is interposed between the inner edge portion of the wall portion 91a and an outer circumferential portion of the cylindrical portion 52a, and the wall portion 24b protrudes outwards from the cylindrical portion 24a in the radial direction, and is positioned between the plate 53 and the wall portion 91a. The intervention member 24 is provided across the plate 53 and the wall portion 52c (the plate 52) which are separated from each other in the axial direction. A gap is provided between the wall portions 24b and 91a. The intervention member 25 has a circular annular wall portion 25a positioned between the wall portions 52c and 91a. Gaps are respectively provided between the wall portions 25a and 52c, and between the wall portions 25a and 91a. In the embodiment, the weight member 91 is radially supported and located by the rotating body 5 via the intervention member 24. That is, the intervention member 24 can prevent the weight member 91 from moving (juddering) in the radial direction. The intervention member 24 prevents the plate 53 and the wall portion 52c (the plate 52) from approaching each other in the axial direction. In addition, the intervention members 24 and 25 prevent the weight member 91 from moving (slanting) in the axial direction. In the embodiment, since the gaps are respectively provided between the wall portions 91a and 24b and between the wall portions 91a and 25a, when the weight member 91 and the rotating body 5 rotate relative to each other, it is easy to prevent sliding between the wall portions 91a and 24b, and sliding between the wall portions 91a and 25a. The intervention member 24 is also referred to as a bearing member. The intervention members 24 and 25 are also referred to as a sliding member or a preventive member. The intervention members 24 and 25 are made of a synthetic resin material or the like.

As described above, in the embodiment, the weight member 91 and the elastic portion 92 of the dynamic vibration absorber 9 are positioned outside of the accommodation chamber 4d that is formed by at least part of the rotating body 4 (the first rotating body). Accordingly, in the embodiment, since the dynamic vibration absorber 9 is provided outside of the accommodation chamber 4d, unlike a configuration in which the dynamic vibration absorber 9 is provided in the accommodation chamber 4d, it is possible to prevent the occurrence of disadvantages, for example, a disadvantage that the size or disposition of each part of the damper apparatus 1 is limited, or a disadvantage that an overall size of the damper apparatus 1 is increased.

In the embodiment, the weight member 91 has the first portion 91x positioned on the radial (the direction of arrow R) outside of the elastic portion 92 (the third elastic portion). Accordingly, in the embodiment, it is easy to increase the inertia of the weight member 91 compared to a configuration in which the weight member 91 does not have the first portion 91x.

In the embodiment, the weight member 91 has the second portion 91y positioned on the radial (the direction of arrow R) outside of the accommodation chamber 4d. Accordingly, in the embodiment, it is easy to increase the inertia of the weight member 91 much further compared to a configuration in which the weight member 91 does not have the second portion 91y.

In the embodiment, the rotating body 4 is provided with the concave portion 41a that is concave in the axial direction (the direction of arrow X), and at least part (the bent portion 91b) of the weight member 91 is accommodated in the concave portion 41a. Accordingly, in the embodiment, it is possible to prevent an increase in the axial size of the damper apparatus 1, and to increase the inertia of the weight member 91 unlike a configuration in which the rotating body 4 is not provided with a concave portion.

In the embodiment, the damper apparatus 1 includes the intervention members 21 and 22 which are interposed between the rotating body 4 and the rotating body (the second rotating body) 5, slide against at least one of the rotating bodies 4 and 5, and prevent leakage of the lubricant to the outside of the accommodation chamber 4d. Accordingly, in the embodiment, the lubricant is likely to stay in the accommodation chamber 4d. As a result, by virtue of the lubricant, it is easy to further increase the effects of reducing friction between the elastic portion 7 and other members (the wall portions 4a and 4b, the connection portion 4c, or the like). The intervention members 21 and 22 can apply sliding torque (frictional torque or resistant torque) to the rotating bodies 4 and 5 which rotate relative to each other. That is, in the embodiment, the intervention members 21 and 22 can be used as members that work to seal the accommodation chamber 4d and to apply sliding torque. As a result, it is easy to greatly simplify the configuration of the damper apparatus 1 compared to a configuration in which a member to seal the accommodation chamber 4d and a member to apply sliding torque are separately provided.

In the embodiment, the elastic portion (the second elastic portion) 8 is positioned outside of the accommodation chamber 4d, and on the radial (the direction of arrow R) inside of the elastic portion (the first elastic portion) 7. Accordingly, in the embodiment, it is possible to decrease the moment arm of the elastic portion 8, and it is easy to further decrease sliding torque between the elastic portion 8 and other members (the rotating body 5, the rotating body 6, or the like). Since the elastic portion 8 is positioned outside of the accommodation chamber 4d, it is easy to greatly simplify the configuration of the damper apparatus 1 and to further decrease the weight thereof compared to a configuration in which the elastic portions 7 and 8 are positioned in the accommodation chamber 4d.

In the embodiment, the flange portion 52d and the plate 51 of the rotating body 5 are connected to the cylindrical portion 52a and the wall portion 52c of the rotating body 5 via the cylindrical portion (connection portion) 52b outside of the outer edge portion (radial outer end portion) 6b1 of the rotating body 6 in the radial direction, in which the flange portion 52d and the plate 51 are formed on the second axial side (the right side in Fig. 4) of the rotating body 6 (the wall portion 6b), and the cylindrical portion 52a and the wall portion 52c are positioned on the first axial side, and are connected to the dynamic vibration absorber 9. Accordingly, in the embodiment, the rotating body 6 and the cylindrical portion 52b can be realized using a much simpler configuration.

In the embodiment, the elastic portion 92 is positioned further inside than the outer edge portion (radial outer end portion) 6b1 of the rotating body 6 (the wall portion 6b) in the radial direction. Accordingly, in the embodiment, it is possible to dispose the elastic portion 92 at a position much closer to the rotation center Ax. As a result, the weight member 91 can be provided in a much wider region outside of the elastic portion 92 in the radial direction.

In the embodiment, the weight member 91 is supported and located by the rotating body 5; however, the weight member 91 may be supported and located by the rotating body 6. Second Embodiment. The second embodiment is not part of the claimed invention.

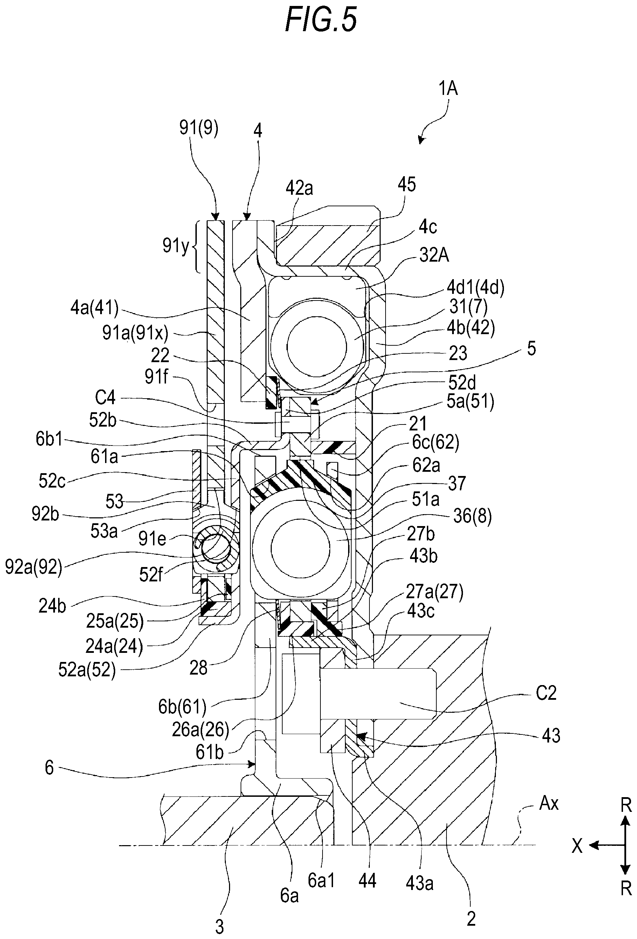

A damper apparatus 1A in another embodiment illustrated in Fig. 5 has the same configuration as that of the damper apparatus 1 of the first embodiment. Accordingly, also in this embodiment, the same results (effects) can be obtained based on the same configuration as that of the first embodiment.

In the embodiment, as illustrated in Fig. 5, the elastic member 31 is supported by a pair of support members (retainers) 32A which is positioned on the opposite sides of the elastic member 31 in the circumferential direction. The support member 32A has a portion positioned further outside than the elastic member 31 in the radial direction. Accordingly, in the embodiment, the support member 32A can work to more stably support the elastic member 31, to help the elastic member 31 to undergo more stable elastic deformation (expansion and contraction), or to prevent direct contact between the elastic member 31 and the rotating body 4 (prevent wear of the elastic member 31). The support member 32A is made of a synthetic resin material or the like.

The embodiments disclosed here have been illustrated, and the embodiments are examples, and do not intend to limit the scope of this disclosure. The embodiments can be implemented in various forms, and the embodiments can be omitted, replaced, combined, or changed in various forms insofar as the omissions, replacements, combinations, or changes do not depart from the spirit of this disclosure. The embodiments are included in the scope or spirit of this disclosure, and are included in the subject described in the claims and a scope equivalent thereto. This disclosure can also be realized in configurations other than those disclosed in the embodiments, and it is possible to acquire various effects (including derivative effects) obtainable from a fundamental configuration (technical features). The specifications (the structure, type, direction, shape, size, length, width, height, number of configurational elements, disposition, positions, material, and the like) of each configurational element can be appropriately changed, and the configuration element can be realized.

## Claims

1. A damper apparatus (1, 1A) comprising:
a first rotating body (4) configured to be able to rotate about a rotation center (Ax);
a second rotating body (5) configured to be able to rotate about the rotation center (Ax);
a first elastic portion (7) that is accommodated in an accommodation chamber (4d) formed by at least part of the first rotating body (4), is interposed between the first rotating body (4) and the second rotating body (5), and is elastically deformed by relative rotation between the first rotating body (4) and the second rotating body (5);
a third rotating body (6) configured to be able to rotate about the rotation center (Ax);
a second elastic portion (8) that is interposed between the second rotating body (5) and the third rotating body (6), and is elastically deformed by relative rotation between the second rotating body (5) and the third rotating body (6); and
a dynamic vibration absorber (9) configured to include
a weight member (91) and
a third elastic portion (92) that is interposed between the weight member (91) and the second rotating body (5) and is elastically deformed by relative rotation between the weight member (91) and the second rotating body (5),
in which the weight member (91) and the third elastic portion (92) are positioned outside of the accommodation chamber (4d), and
the weight member (91) has a flat portion (91x) positioned further outside than the third elastic portion (92) relative to the rotation center (Ax) in a radial direction (R), **characterized in that**
the weight member (91) further has a bent portion (91b) that extends outwards from the flat portion (91x) in the radial direction (R), and is bent inwards in the radial direction (R),
the first rotating body (4) is provided with a concave portion (41a) that is concave in an axial direction relative to the rotation center (Ax), and at least part of the bent portion (91b) of the weight member (91) is positioned in the concave portion (41a) that is formed in an outer edge portion of the first rotating body (4).

2. The damper apparatus (1, 1A) according to claim 1,
wherein at least part of the weight member (91) is accommodated in the concave portion (41a).

3. The damper apparatus (1, 1A) according to claim 1 or claim 2,
wherein lubricant is accommodated in the accommodation chamber (4d),
wherein the damper apparatus (1, 1A) further comprises an intervention member (26, 27) that is interposed between the first rotating body (4) and the second rotating body (5), slides against at least one of the first rotating body (4) and the second rotating body (5), and prevents leakage of the lubricant to the outside of the accommodation chamber (4d).

4. The damper apparatus (1, 1A) according to any one of claims 1 to 3,
wherein the second elastic portion (8) is positioned outside of the accommodation chamber (4d), and is positioned further inside than the first elastic portion (7) relative to the rotation center (Ax) in the radial direction (R).

5. The damper apparatus (1, 1A) according to any one of claims 1 to 4,
wherein the second rotating body (5) has a connection portion that extends inwards from outside of a radial end portion of the third rotating body (6) in the radial direction (R) so as to surround the third elastic portion (92), and is connected to the dynamic vibration absorber.

6. The damper apparatus (1, 1A) according to any one of claims 1 to 5,
wherein the third elastic portion (92) is positioned further inside than the radial outer end portion of the third rotating body (6) relative to the rotation center (Ax) in the radial direction (R).

7. The damper apparatus (1, 1A) according to any one of claims 1 to 6, further comprising:
a connection portion which is fixed to the second rotating body (5) outside of the third rotating body (6) in the radial direction (R), and through which the second elastic portion (8) is provided in line with the third elastic portion (92) in the axial direction.

8. The damper apparatus (1, 1A) according to claim 7,
wherein the weight member (91) is supported by the third elastic portion (92) via the connection portion.

## Patentansprüche

1. Dämpfervorrichtung (1, 1A) mit:
einem ersten sich drehenden Körper (4), der dazu ausgebildet ist, imstande zu sein, sich um ein Drehzentrum (Ax) zu drehen;
einem zweiten sich drehenden Körper (5), der dazu ausgebildet ist, imstande zu sein, sich um das Drehzentrum (Ax) zu drehen;
einem ersten elastischen Abschnitt (7), der in einer Aufnahmekammer (4d), die durch zumindest einen Teil des ersten sich drehenden Körpers (4) ausgebildet ist, aufgenommen ist, zwischen dem ersten sich drehenden Körper (4) und dem zweiten sich drehenden Körper (5) eingefügt ist und durch relative Drehung zwischen dem ersten sich drehenden Körper (4) und dem zweiten sich drehenden Körper (5) elastisch verformt wird;
einem dritten sich drehenden Körper (6), der dazu ausgebildet ist, imstande zu sein, sich um das Drehzentrum (Ax) zu drehen;
einem zweiten elastischen Abschnitt (8), der zwischen dem zweiten sich drehenden Körper (5) und dem dritten sich drehenden Körper (6) eingefügt ist und durch relative Drehung zwischen dem zweiten sich drehenden Körper (5) und dem dritten sich drehenden Körper (6) elastisch verformt wird; und
einem dynamischen Schwingungsabsorber (9), der dazu ausgebildet ist,
ein Gewichtsbauteil (91) und
einen dritten elastischen Abschnitt (92), der zwischen dem Gewichtsbauteil (91) und dem zweiten sich drehenden Körper (5) eingefügt ist und durch relative Drehung zwischen dem Gewichtsbauteil (91) und dem zweiten sich drehenden Körper (5) elastisch verformt wird, aufzuweisen,
bei dem das Gewichtsbauteil (91) und der dritte elastische Abschnitt (92) außerhalb der Aufnahmekammer (4d) positioniert sind, und
das Gewichtsbauteil (91) einen flachen Abschnitt (91x) aufweist, der in einer radialen Richtung (R) relativ zu den Drehzentrum (Ax) weiter außerhalb als der dritte elastische Abschnitt (92) positioniert ist, **dadurch gekennzeichnet, dass**
das Gewichtsbauteil (91) ferner einen gebogenen Abschnitt (91b) aufweist, der sich von dem flachen Abschnitt (91x) in der radialen Richtung (R) auswärts erstreckt und in der radialen Richtung (R) einwärts gebogen ist,
der erste sich drehende Körper (4) mit einem konkaven Abschnitt (41a) versehen ist, der in einer axialen Richtung relativ zu dem Drehzentrum (Ax) konkav ist, und zumindest ein Teil des gebogenen Abschnitts (91b) des Gewichtsbauteils (91) in dem konkaven Abschnitt (41a), der in einem Außenrandabschnitt des ersten sich drehenden Körpers (4) ausgebildet ist, positioniert ist.

2. Dämpfervorrichtung (1, 1A) nach Anspruch 1,
bei der zumindest ein Teil des Gewichtsbauteils (91) in dem konkaven Abschnitt (41a) aufgenommen ist.

3. Dämpfervorrichtung (1, 1A) nach Anspruch 1 oder Anspruch 2,
bei der Schmiermittel in der Aufnahmekammer (4d) aufgenommen ist,
bei der die Dämpfervorrichtung (1, 1A) ferner ein Eingriffsbauteil (26, 27) aufweist, das zwischen dem ersten sich drehenden Körper (4) und dem zweiten sich drehenden Körper (5) eingefügt ist, gegen mindestens einen von dem ersten sich drehenden Körper (4) und dem zweiten sich drehenden Körper (5) gleitet und ein Austreten des Schmiermittels auf die Außenseite der Aufnahmekammer (4d) verhindert.

4. Dämpfervorrichtung (1, 1A) nach einem der Ansprüche 1 bis 3,
bei der der zweite elastische Abschnitt (8) außerhalb der Aufnahmekammer (4d) positioniert ist und in der radialen Richtung (R) relativ zu dem Drehzentrum (Ax) weiter innerhalb als der erste elastische Abschnitt (7) positioniert ist.

5. Dämpfervorrichtung (1, 1A) nach einem der Ansprüche 1 bis 4,
bei der der zweite sich drehende Körper (5) einen Verbindungsabschnitt aufweist, der sich in der radialen Richtung (R) einwärts von außerhalb eines radialen Endabschnitts des dritten sich drehenden Körpers (6) erstreckt, so dass er den dritten elastischen Abschnitt (92) umgibt, und mit dem dynamischen Schwingungsabsorber verbunden ist.

6. Dämpfervorrichtung (1, 1A) nach einem der Ansprüche 1 bis 5,
bei der der dritte elastische Abschnitt (92) in der radialen Richtung (R) relativ zu dem Drehzentrum (Ax) weiter innerhalb als der radial äußere Endabschnitt des dritten sich drehenden Körpers (6) positioniert ist.

7. Dämpfervorrichtung (1, 1A) nach einem der Ansprüche 1 bis 6, ferner mit:
einem Verbindungsabschnitt, der an dem zweiten sich drehenden Körper (5) außerhalb des dritten sich drehenden Körpers (6) in der radialen Richtung (R) befestigt ist, und durch den der zweite elastische Abschnitt (8) in der axialen Richtung in Reihe mit dem dritten elastischen Abschnitt (92) vorgesehen ist.

8. Dämpfervorrichtung (1, 1A) nach Anspruch 7,
bei der das Gewichtsbauteil (91) durch den dritten elastischen Abschnitt (92) über den Verbindungsabschnitt abgestützt wird.

## Revendications

1. Dispositif amortisseur (1, 1A) comprenant :
un premier corps rotatif (4) configuré pour pouvoir tourner autour d'un centre de rotation (Ax) ;
un deuxième corps rotatif (5) configuré pour pouvoir tourner autour du centre de rotation (Ax) ;
une première partie élastique (7) qui est logée dans une chambre de logement (4d) formée par au moins une partie du premier corps rotatif (4), est interposée entre le premier corps rotatif (4) et le deuxième corps rotatif (5), et est déformée élastiquement par rotation relative entre le premier corps rotatif (4) et le deuxième corps rotatif (5) ;
un troisième corps rotatif (6) configuré pour pouvoir tourner autour du centre de rotation (Ax) ;
une deuxième partie élastique (8) qui est interposée entre le deuxième corps rotatif (5) et le troisième corps rotatif (6), et est déformée élastiquement par rotation relative entre le deuxième corps rotatif (5) et le troisième corps rotatif (6) ; et
un absorbeur de vibrations dynamique (9) configuré pour comprendre
un élément de poids (91) et
une troisième partie élastique (92) qui est interposée entre l'élément de poids (91) et le deuxième corps rotatif (5) et est déformée élastiquement par rotation relative entre l'élément de poids (91) et le deuxième corps rotatif (5),
où l'élément de poids (91) et la troisième partie élastique (92) sont positionnés à l'extérieur de la chambre de logement (4d), et
l'élément de poids (91) comporte une partie plate (91x) placée plus à l'extérieur que la troisième partie élastique (92) par rapport au centre de rotation (Ax) dans une direction radiale (R), **caractérisé en ce que**
l'élément de poids (91) comporte en outre une partie pliée (91b) qui s'étend vers l'extérieur à partir de la partie plate (91x) dans la direction radiale (R), et est pliée vers l'intérieur dans la direction radiale (R),
le premier de corps rotatif (4) est pourvu d'une partie concave (41a) qui est concave dans une direction axiale par rapport au centre de rotation (Ax), et au moins une partie de la partie pliée (91b) de l'élément de poids (91) est positionnée dans la partie concave (41a) qui est formée dans une partie de bord extérieur du premier corps rotatif (4).

2. Dispositif amortisseur (1, 1A) selon la revendication 1,
dans lequel au moins une partie de l'élément de poids (91) est logée dans la partie concave (41a).

3. Dispositif amortisseur (1, 1A) selon la revendication 1 ou la revendication 2,
dans lequel le lubrifiant est logé dans la chambre de logement (4d),
dans lequel le dispositif amortisseur (1, 1A) comprenant en outre un élément d'intervention (26, 27) qui est interposé entre le premier corps rotatif (4) et le deuxième corps rotatif (5), glisse contre au moins un corps parmi le premier corps rotatif (4) et le deuxième corps rotatif (5), et empêche une fuite du lubrifiant à l'extérieur de la chambre de logement (4d).

4. Dispositif amortisseur (1, 1A) selon l'une quelconque des revendications 1 à 3,
dans lequel la deuxième partie élastique (8) est positionnée à l'extérieur de la chambre de logement (4d) et est positionnée plus à l'intérieur que la première partie élastique (7) par rapport au centre de rotation (Ax) dans le sens radial (R).

5. Dispositif amortisseur (1, 1A) selon l'une quelconque des revendications 1 à 4,
dans lequel le deuxième corps rotatif (5) présente une partie de liaison qui s'étend vers l'intérieur depuis l'extérieur d'une partie d'extrémité radiale du troisième corps rotatif (6) dans la direction radiale (R) afin d'entourer la troisième partie élastique (92), et est relié à l'amortisseur dynamique de vibrations.

6. Dispositif amortisseur (1, 1A) selon l'une quelconque des revendications 1 à 5,
dans lequel la troisième partie élastique (92) est positionnée plus à l'intérieur que la partie d'extrémité extérieure radiale du troisième corps rotatif (6) par rapport au centre de rotation (Ax) dans le sens radial (R).

7. Dispositif amortisseur (1, 1A) selon l'une quelconque des revendications 1 à 6, comprenant en outre :
une partie de liaison qui est fixée au deuxième corps rotatif (5) à l'extérieur du troisième corps rotatif (6) dans la direction radiale (R), et à travers laquelle la deuxième partie élastique (8) est prévue en ligne avec la troisième partie élastique (92) dans la direction axiale.

8. Dispositif amortisseur (1, 1A) selon la revendication 7,
dans lequel l'élément de poids (91) est supporté par la troisième partie élastique (92) via la partie de liaison.
